# EUROPÄISCHE PATENTSCHRIFT

(11) **EP 0 539 404 B1**
(45) Veröffentlichungstag und Bekanntmachung des Hinweises auf die Patenterteilung: **07.12.1994**
(21) Anmeldenummer: 91912305.9
(22) Anmeldetag: 06.07.1991
(51) Int. Cl.: B60J 7/12

(54) **AUFBLASBARES DACH FÜR EIN KRAFTFAHRZEUG**
INFLATABLE VEHICLE ROOF
TOIT GONFLABLE POUR UN VEHICULE

(30) Priorität: 23.07.1990 DE 4023348
(43) Veröffentlichungstag der Anmeldung: 05.05.1993
(73) Patentinhaber: Dr.Ing.h.c. F. Porsche Aktiengesellschaft, 70435 Stuttgart (DE)
(72) Erfinder: BURST, Hermann, D-7255 Rutesheim (DE); RAISCH, Dieter, D-7255 Rutesheim (DE); AYDT, Matthias, D-7147 Eberdingen (DE); BRAUN, Walter, D-7032 Sindelfingen (DE); GOESSE, August-Wilhelm, D-7251 Mönsheim (DE)
(86) Internationale Anmeldenummer: EP9101263
(87) Internationale Veröffentlichungsnummer: WO9201581

(56) Entgegenhaltungen:
- EP-A- 166 671
- FR-A- 1 216 440
- FR-A- 1 515 149
- US-A- 3 050 334
- US-A- 3 227 486

## Beschreibung

Die Erfindung bezieht sich auf ein aufblasbares Dach für ein Fahrzeug, insbesondere einen Personenkraftwagen, das sich in aufgeblasenem Zustand zwischen einem Windschutzscheibenrahmen und einem Heckbereich des Aufbaus erstreckt, wobei das Dach in eine Vielzahl von Luftkammern unterteilt ist.

Bei einem bekannten aufblasbaren Dach der eingangs genannten Gattung (US-PS 3 227 486) ist der gesamte Dachbereich in nebeneinander liegende, längsgerichtete, röhrenförmig ausgebildete Luftkammern unterteilt, wobei das Dach als Zweikammersystem ausgebildet ist, so daß bei einem Defekt der einen Luftkammer die Funktion des Daches zumindest eingeschränkt erhalten bleibt. Die Luftkammern der beiden Kammersysteme weisen dabei den gleichen Betriebsdruck auf.

Durch die außenhautseitigen Rillen zwischen den jeweils benachbarten Luftkammern weist dieses Dach keine glattflächige Außenhaut auf, wodurch der Luftwiderstandsbeiwert erhöht wird. Ferner tritt das Problem auf, daß bei einem prallen Aufblasen der Luftkammern zwar eine ausreichende Steifigkeit des Daches erzielt wird, daß sich jedoch bei einem derartigen Aufblasen das Dach ballonartig aufbläht, was nicht erwünscht ist.

Aufgabe der Erfindung ist es, ein aufblasbares Dach so weiterzuentwickeln, daß bei gutem Luftwiderstandsbeiwert eine ausreichende Steifigkeit des Daches erzielt wird, und daß ferner ein ballonartiges Aufblähen des Daches vermieden wird.

Erfindungsgemäß wird diese Aufgabe durch die kennzeichnenden Merkmale des Anspruchs 1 gelöst. Weitere, die Erfindung in vorteilhafter Weise ausgestaltende Merkmale sind in den Unteransprüchen enthalten.

Die mit der Erfindung hauptsächlich erzielten Vorteile sind darin zu sehen, daß durch die Ausbildung einer Rahmen- bzw. Stützstruktur mit relativ hohem Betriebsdruck und durch dazwischenliegende Zonen mit einem wesentlich niedrigerem Betriebsdruck ein aufblasbares Dach geschaffen wird, das eine ausreichende Steifigkeit aufweist und das sich dabei nicht ballonartig aufbläht. Ferner wird durch die unterschiedlichen Betriebsdrücke in den einzelnen Luftkammern die Befülldauer reduziert. Die Form des Daches wird durch die Rahmen- oder Stützstruktur festgelegt, die dazwischenliegenden Bereiche haben lediglich eine formunterstützende Wirkung.

Durch die Anordnung von zusätzlichen Formgebungselementen wird die Formstabilität des Daches noch weiter erhöht. Die wulstartigen Endbereiche der umfangsseitigen ersten Luftkammer der Rahmen- oder Stützstruktur erlauben in Verbindung mit den hinterschnittenen Aufnahmen am Windschutzscheibenrahmen und im Heckbereich eine einfache Befestigung des Daches am Aufbau. In evakuiertem Zustand läßt sich das Dach zusammengerollt in einem relativ kleinen Stauraum des Heckbereichs aufbewahren.

Ein Ausführungsbeispiel der Erfindung ist in der Zeichnung dargestellt und wird im folgenden näher beschrieben.
Es zeigt
- Fig. 1: eine Draufsicht auf einen Personenkraftwagen mit einem aufblasbaren Dach,
- Fig. 2: eine Seitenansicht der Fig. 1,
- Fig. 3: einen Schnitt nach der Linie III-III der Fig. 1 in größerem Maßstab,
- Fig. 4: einen Schnitt nach der Linie IV-IV der Fig. 1 in größerem Maßstab,
- Fig. 5: einen Schnitt nach der Linie V-V der Fig. 1 in größerem Maßstab,
- Fig. 6: einen Schnitt nach der Linie VI-VI der Fig. 1 in größerem Maßstab,
- Fig. 7: eine Ansicht entsprechend Fig. 1 mit einer weiteren Ausführungsform eines aufblasbaren Daches,
- Fig. 8: eine Seitenansicht der Fig. 7,
- Fig. 9: einen Schnitt nach der Linie IX-IX der Fig. 7 in größerem Maßstab,
- Fig. 10: einen Schnitt nach der Linie X-X der Fig. 7 in größerem Maßstab.
- Fig. 11: einen Schnitt entsprechend Fig. 3 mit einer weiteren Ausführungsform einer Befestigung des aufblasbaren Daches am Windschutzscheibenrahmen,
- Fig. 12: eine Ansicht in Pfeilrichtung R der Fig. 7 auf ein Formgebungselement mit unterschiedlichem Querschnitt.

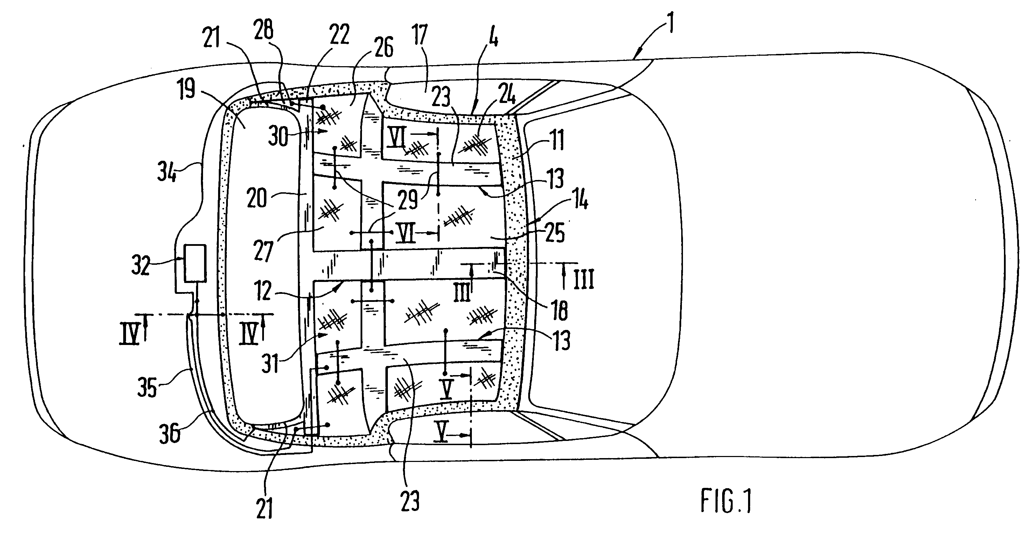

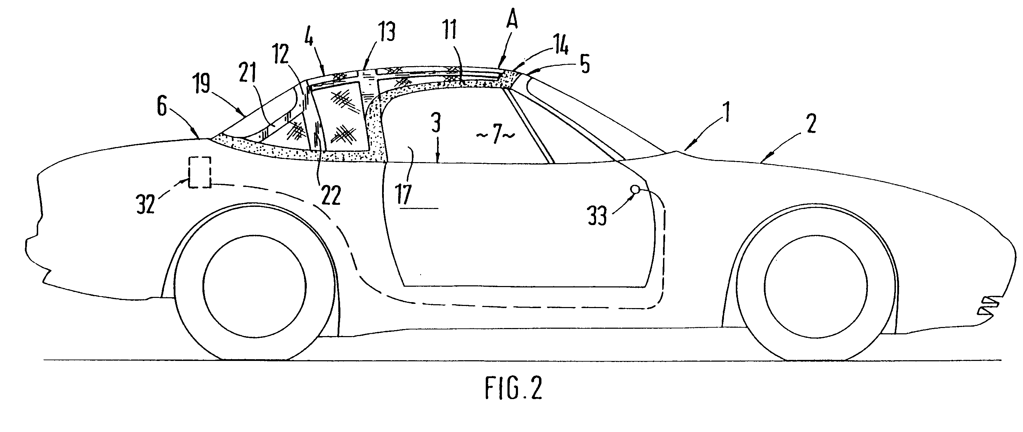

Die Fig. 1 und 2 zeigen einen Personenkraftwagen 1 mit einem Aufbau 2, wobei oberhalb einer Gürtellinie 3 ein aufblasbares bzw. evakuierbares Dach 4 angeordnet ist, das sich im aufgeblasenen Zustand A (geschlossenes Dach) zwischen einem Windschutzscheibenrahmen 5 und einem Heckbereich 6 erstreckt und einen Fahrgastraum 7 nach oben hin abdeckt. Nach Evakuieren des Daches 4 läßt sich dieses zusammenrollen und in einem nicht näher dargestellten Aufnahmeraum des Heckbereiches 6 unterbringen, wobei zur Unterbringung des zusammengerollten Daches 4 nur ein geringer Bauraum erforderlich ist.

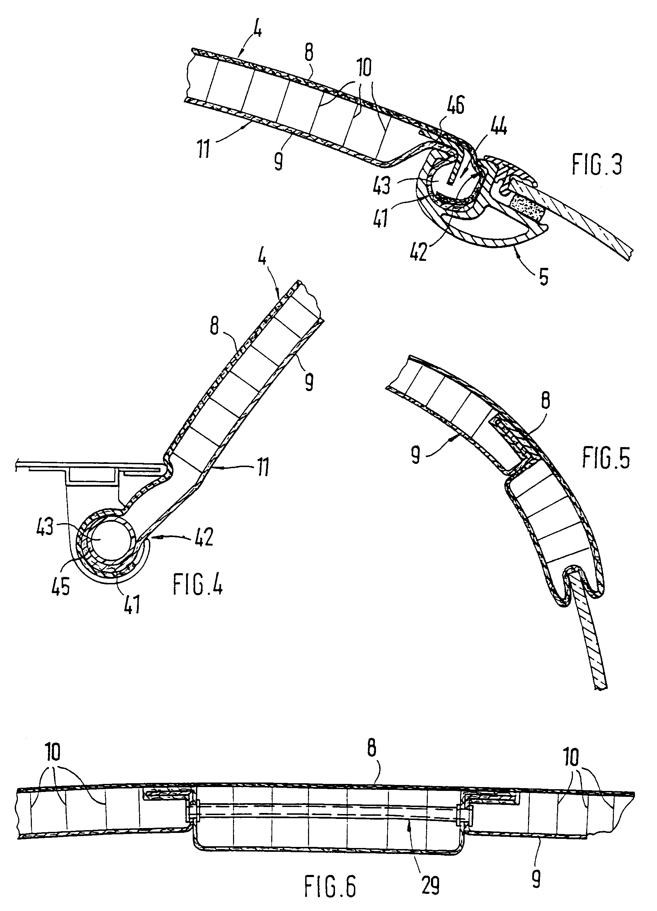

Das Dach 4 besteht im wesentlichen aus zwei mit Abstand zueinander angeordneten Lagen 8, 9 aus einem flexiblen, widerstandsfähigen und luftundurchlässigen Werkstoff, die örtlich über eine großflächige Verklebung miteinander verbunden sind (Fig. 3 bis 6). Als Werkstoff eignet sich z. B. ein Textildoppelgewebe (gummierte Schlingenware), das außenseitig luftundurchlässig kaschiert ist. Zwischen den beiden Lagen 8, 9 erstrecken sich örtlich Fäden 10 (Schlingen), die als Abstandselemente dienen, so daß die beiden Lagen 8, 9 in einem gewünschten, gleichbleibenden Abstand zueinander verlaufen.

Das gesamte Dach 4 ist in eine Vielzahl von Luftkammern unterteilt, die eine unterschiedliche Form und Flächenerstreckung aufweisen, wobei zumindest Gruppen von Luftkammern ein unterschiedliches Druckniveau (Betriebsdruck) aufweisen. Gemäß Fig. 1 umfaßt das Dach 4 eine aus mehreren Luftkammern 11, 12, 13 zusammengesetzte Rahmen- bzw. Stützstruktur 14, die die Form des Daches 4 bestimmt. In den Luftkammern 11, 12, 13 der Rahmen- bzw. Stützstruktur 14 ist der Betriebsdruck wesentlich größer (höher) als in den dazwischenliegenden Luftkammern.

Im Ausführungsbeispiel setzt sich die Rahmen- bzw. Stützstruktur 14 des Daches 4 aus drei voneinander unabhängigen Luftkammern 11, 12, 13 zusammen. Eine erste Luftkammer 11 der Rahmen- bzw. Stützstruktur 14 erstreckt sich entlang des Umfanges des Daches 4 und wirkt bei geschlossenem Dach 4 mit dem Windschutzscheibenrahmen 5, den beiden rahmenlos ausgebildeten Türfensterscheiben 17 sowie in Höhe der Gürtellinie 3 mit der Aufbaustruktur zusammen. Eine zweite Luftkammer 12 der Rahmen- bzw. Stützstruktur 14 des Daches 4 umfaßt einen längsgerichteten, etwa in der Fahrzeugmitte verlaufenden Abschnitt 18, dessen vorderes Ende an die erste Luftkammer 11 herangeführt ist, wogegen das hintere Ende in einen querverlaufenden, den oberen Rand einer Heckscheibe 19 einfassenden Abschnitt 20 einmündet.

Der querverlaufende Abschnitt 20 teilt sich an seinen beiden seitlich außenliegenden Bereichen jeweils in zwei Arme 21, 22, wobei ein Arm 21 benachbart einem seitlichen Rand der Heckscheibe 19 verläuft, während der zweite Arm 22 in Fortsetzung des querverlaufenden hinteren Abschnitts 20 in Richtung Gürtellinie 3 verläuft und an die erste Luftkammer 11 stumpf angeschlossen ist. Sämtliche Endabschnitte der zweiten Luftkammer 12 sind an die außenliegende erste Luftkammer 11 herangeführt.

Eine dritte Luftkammer 13 der Rahmen- bzw. Stützstruktur 14 umfaßt zwei kreuzförmig ausgebildete Abschnitte 23, wobei jeder kreuzförmige Abschnitt 23 mit seinen freien Enden an die erste und die zweite Luftkammer 11, 12 herangeführt ist. Ein längsgerichteter Schenkel jedes kreuzförmigen Abschnittes 23 ist vorne an die erste und hinten an die zweite Luftkammer angeschlossen, wogegen der quergerichtete Schenkel die außenliegende erste Luftkammer 11 und den innenliegenden längsgerichteten Abschnitt 18 der zweiten Luftkammer 12 miteinander verbindet.

Durch die kreuzförmige Ausgestaltung der dritten Luftkammer 13 und die beiden seitlichen Arme 21, 22 der zweiten Luftkammer 12 werden im Ausführungsbeispiel auf jeder Dachhälfte weitere fünf Luftkammern 24, 25, 26, 27, 28 gebildet, die über Verbindungsleitungen 29 miteinander in Wirkverbindung stehen. Die Verbindungsleitungen 29 sind quer durch Abschnitte der ersten und zweiten Luftkammern 11, 12 hindurchgeführt (Fig. 6). Die Luftkammern 24 bis 28 zwischen der Rahmen- bzw. Stützstruktur 14 weisen einen wesentlich geringeren Betriebsdruck auf als die Rahmen- bzw. Stützstruktur 14. Der Betriebsdruck in der Rahmen- bzw. Stützstruktur 14 ist etwa doppelt so groß als in den Luftkammern 24 bis 28. Es ist vorgesehen, daß die fünf Luftkammern 24 bis 28 jeder Dachhälfte ein eigenes Luftkammersystem 30, 31 bilden, so daß bei einem Ausfall eines Luftkammersystems (z. B. 30) die Funktion des Daches 4 weitgehend erhalten bleibt.

Ein im Heckbereich 6 - etwa in Fahrzeugmitte - angeordneter Kompressor 32 zum Aufblasen bzw. Ablassen von Druckluft für das Dach 4 wird vom Fahrgastraum 7 aus mittels eines Schalters 33 in Gang gesetzt und ist über Leitungen 34, 35, 36 mit den drei Luftkammern 11, 12, 13 der Rahmen- bzw. Stützstruktur 14 und den beiden Luftkammersystemen 30, 31 mit dem niedrigeren Betriebsdruck verbunden.

In der Zuleitung 34 zu dem Luftkammersystem 30, 31 mit dem niedrigeren Betriebsdruck ist ein nicht näher dargestelltes Druckregelventil eingebaut, so daß diese Luftkammern nur bis zu einem definierten Betriebsdruck aufgeblasen werden können.

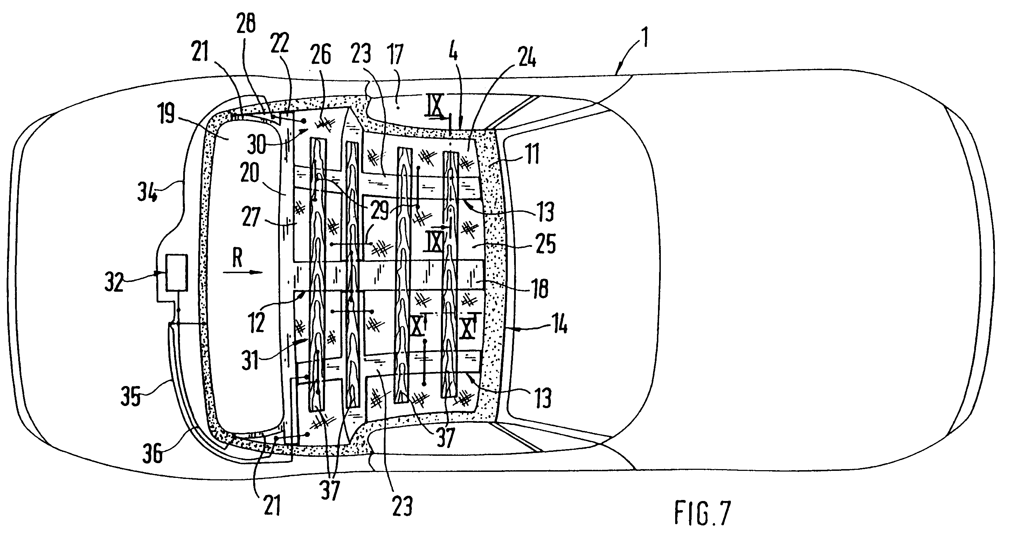

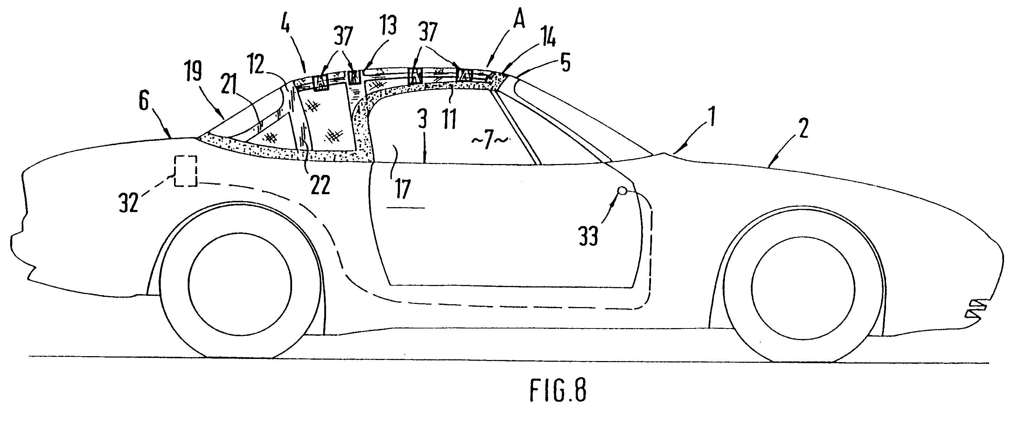

Bei einem zweiten Ausführungsbeispiel (Fig. 7 und 8) sind zusätzlich zur Formunterstützung des Daches 4 mehrere mit Abstand zueinander angeordnete, sich in Fahrzeugquerrichtung erstreckende Formgebungselemente 37 vorgesehen. Die Formgebungselemente 37 werden durch Latten 38 aus Holz oder Kunststoff gebildet, die entsprechend einer ersten Variante einen gleichbleibenden Querschnitt besitzen und gemäß dem gewünschten Formverlauf des Daches 4 vorgebogen sind.

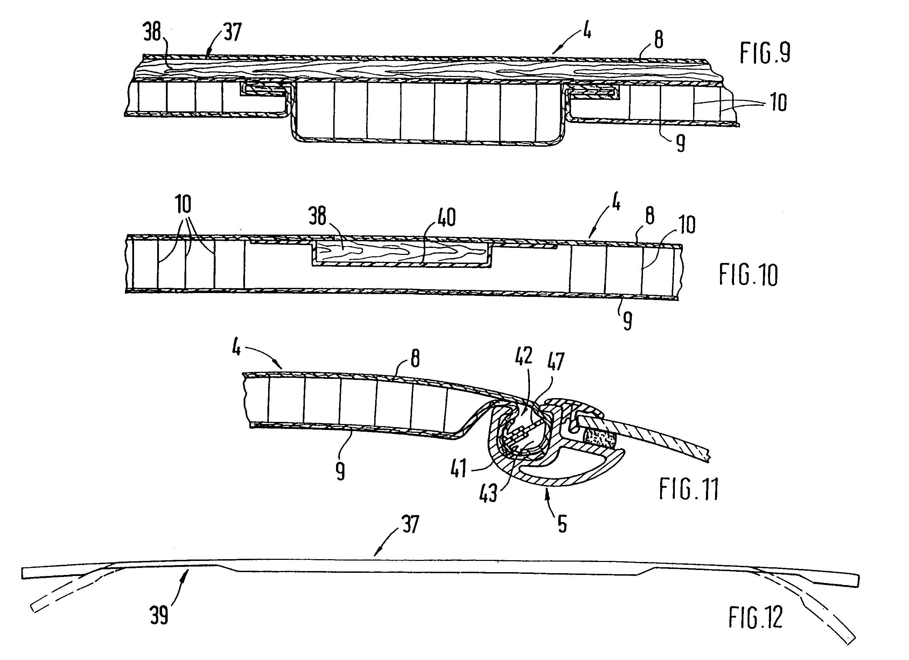

Bei einer zweiten Variante ist vorgesehen, daß die Formgebungselemente 37 einen geradlinigen Formverlauf entlang ihrer Längserstreckung aufweisen und in Teilbereichen ihrer Längserstreckung mit einem unterschiedlichen Querschnitt versehen sind. Gemäß Fig. 12 weisen die Formgebungselemente 37 benachbart von seitlichen Endbereichen Abschnitte 39 mit einer Querschnittsverringerung auf. Die Formgebungselemente 37 sind in Aufnahmetaschen 40 eingelegt, die an der äußeren Lage 8 des Daches 4 innenseitig befestigt sind (Fig. 10). Die Aufnahmetaschen 40 sind durch Kleben mit der äußeren Lage 8 des Daches 4 verbunden. Die Formgebungselemente 37 sind lose in die Aufnahmetaschen 40 eingesteckt und erstrecken sich über einen wesentlichen Teil der Breite des Daches 4; sie enden kurz vor den seitlich außenliegenden Abschnitten der ersten Luftkammer 11.

Das Dach 4 ist an seinem unteren Endbereich entlang der Gürtellinie 3 am angrenzenden Aufbau (Heckbereich 6) befestigt. Dies kann durch Druckknöpfe, einen Reißverschluß oder andere Schnellbefestigungselemente erfolgen. Ferner ist eine lösbare Verbindung zwischen dem vorderen Rand des Daches 4 und dem Windschutzscheibenrahmen 5 vorgesehen.

Eine besonders einfache Befestigung des Daches 4 am Aufbau 2 wird dadurch erreicht, daß die umfangsseitige erste Luftkammer 11 der Rahmen- bzw. Stützstruktur 14 im Bereich des Windschutzscheibenrahmens 5 und des Heckbereiches 6 einen wulstförmigen Endbereich 41 aufweist, der in eine mit einer Hinterschneidung 42 versehene Aufnahme 43 des Windschutzscheibenrahmens 5 und des Heckbereichs 6 einsetzbar ist. Innerhalb des wulstförmigen Endbereiches sind Mittel 44 angeordnet, die den aufgeblasenen Endbereich 41 innerhalb der Aufnahme 43 fixieren.

Entlang des bogenförmigen Heckbereichs 6 ist vorgesehen, daß ein Schlauch 45 zur Fixierung des Daches 4 in den wulstförmigen Endbereich 41 bzw. die Aufnahme 43 eingeschoben ist (Fig. 4). Das Einführen des Schlauches 45 stellt einen einmaligen Montagevorgang dar, da der hintere Endbereich des Daches 4 stets mit dem angrenzenden Aufbau 2 fest verbunden ist. Im Bereich des Windschutzscheibenrahmens 5 ist vorgesehen, daß ein Kunststoffwinkel 46 im Bereich des wulstförmigen Endbereiches 41 des Daches 5 angeklebt wird, der als Einführhilfe für den Endbereich 41 dient. Ein Schenkel dieses Kunststoffwinkels verläuft parallel zu den beiden Lagen 8, 9 des Daches 4, wogegen der andere Schenkel etwa rechtwinkelig nach unten in Richtung Aufnahme 43 zeigt (Fig. 3).

Gemäß einer zweiten Ausführungsform (Fig. 11) ist innerhalb des querverlaufenden wulstförmigen Endbereiches 41 des Daches 4 eine Latte 47 eingelegt, die sich nach Einsetzen des Endbereiches 41 in die Aufnahme 43 querstellt.

Die Form des Daches 4 wird bei der erfindungsgemäßen Anordnung durch die Rahmen- bzw. Stützstruktur 14 festgelegt, wogegen die Luftkammern 24 bis 28 mit dem geringeren Betriebsdruck nur eine formunterstützende Wirkung haben. Die einzelnen Luftkammern der Rahmen- bzw. Stützstruktur 14 sind durch nicht näher dargestellte Ventile gegeneinander abgesichert.

Die Montage eines zusammengerollten Daches 4 erfolgt in der Weise, daß das Dach 4 auseinandergerollt und danach bis zu einem mittleren Druckniveau befüllt wird, in der es einigermaßen seine Form annimmt.

Beim Befüllen werden zuerst die erste Luftkammer 11, danach die zweite und dritte Luftkammer 12, 13 der Rahmen- und Stützstruktur 14 und anschließend die verbleibenden Luftkammern 24 bis 28 befüllt.

Bei einem mittleren Druckniveau läßt sich der vordere wulstförmige Endbereich 41 einfach in die Aufnahme 43 des Windschutzscheibenrahmens 5 einführen und befestigen. Danach erfolgt das Befüllen des Daches 4 bis zum endgültigen Betriebsdruck.

## Patentansprüche

1. Aufblasbares Dach für ein Fahrzeug, insbesondere für einen Personenkraftwagen, das sich in aufgeblasenem Zustand zwischen einem Windschutzscheibenrahmen und einem Heckbereich des Aufbaus erstreckt, wobei das Dach in eine Vielzahl von Luftkammern unterteilt ist, **dadurch gekennzeichnet**, daß das Dach (4) Luftkammern (11, 12, und 13 bzw. 24, 25, 26, 27, 28) mit einem unterschiedlichen Druckniveau (Betriebsdruck) und eine aus mehreren Luftkammern (11, 12 und 13) bestehende, die Form des Daches festlegende Rahmen- bzw. Stützstruktur (14) aufweist, wobei in den Luftkammern der Rahmen- bzw. Stützstruktur (14) ein wesentlich größeres Druckniveau vorhanden ist als in den dazwischenliegenden Luftkammern (24, 25, 26, 27 und 28).

2. Dach nach Anspruch 1, **dadurch gekennzeichnet**, daß sich die Rahmen- bzw. Stützstruktur (14) des Daches (4) aus drei voneinander unabhängigen Luftkammern (11, 12 und 13) zusammensetzt.

3. Dach nach Anspruch 1 oder 2, **dadurch gekennzeichnet**, daß sich eine erste Luftkammer (11) der Rahmen- oder Stützstruktur (14) umfangseitig entlang des Daches (4) erstreckt.

4. Dach nach Anspruch 1 oder 2, **dadurch gekennzeichnet**, daß sich eine zweite Luftkammer (12) der Rahmen- oder Stützstruktur (14) aus einem längsgerichteten, etwa in der Fahrzeugmitte verlaufenden Abschnitt (18) und aus einem benachbart einem oberen Rand einer Heckscheibe (19) angeordneten, querverlaufenden Abschnitt (20) zusammensetzt, wobei sich der querverlaufende Abschnitt (20) an seinen beiden seitlich außenliegenden Bereichen jeweils in zwei Arme (21 bzw. 22) teilt, die winkelig zueinander verlaufen.

5. Dach nach Anspruch 3 oder 4, **dadurch gekennzeichnet**, daß Endabschnitte der zweiten Luftkammer (12) an die erste Luftkammer (11) herangeführt sind.

6. Dach nach Anspruch 1 oder 2, **dadurch gekennzeichnet**, daß eine dritte Luftkammer (13) der Rahmen- bzw. Stützstruktur (14) aus zwei kreuzförmigen Abschnitten (23) zusammengefaßt ist, wobei jeder kreuzförmige Abschnitt (23) einerseits an die erste Luftkammer (11) und andererseits an die zweite Luftkammer (12) herangeführt ist.

7. Dach nach einem der vorhergehenden Ansprüche, **dadurch gekennzeichnet**, daß das Dach (4) zwei voneinander unabhängige Luftkammersysteme (30 bzw. 31) mit einem wesentlich niedrigeren Betriebsdruck aufweist, wobei jedes Luftkammersystem (30 bzw. 31) aus mehreren, miteinander verbundenen Luftkammern (24, 25, 26, 27 und 28) besteht, die sich in den Zwischenräumen zwischen den drei Luftkammern (11, 12 und 13) der Rahmen- oder Stützstruktur (14) erstrecken.

8. Dach nach Anspruch 7, **dadurch gekennzeichnet**, daß zwei benachbarte Luftkammern (z. B. 24 und 25) des Luftkammersystems (30 bzw. 31) durch eine Verbindungsleitung (29) miteinander in Wirkverbindung stehen, wobei die Verbindungsleitung (29) durch eine Luftkammer (z.B. 13) der Rahmen- oder Stützstruktur (14) hindurchgeführt ist.

9. Dach nach Anspruch 1, **dadurch gekennzeichnet**, daß das aufblasbare Dach (4) zusätzlich sich in Fahyzeugquerrichtung erstreckende Formgebungselemente (37) aufweist.

10. Dach nach Anspruch 9, **dadurch gekennzeichnet**, daß die Formgebungselemente (37) durch Latten (38) aus Kunststoff gebildet werden.

11. Dach nach Anspruch 10, **dadurch gekennzeichnet**, daß die Latten (38) in Aufnahmetaschen (40) des Daches (4) angeordnet sind.

12. Dach nach Anspruch 10, **dadurch gekennzeichnet**, daß die Latten (38) Bereiche mit unterschiedlichem Querschnitt aufweisen.

13. Dach nach einem der vorhergehenden Ansprüche, **dadurch gekennzeichnet**, daß die umfangsseitige erste Luftkammer (11) der Rahmen- oder Stützstruktur (14) im Bereich des Windschutzscheibenrahmens (5) und des Heckbereichs (6) einen wulstförmigen Endbereich (41) aufweist, der in eine hinterschnittene Aufnahme (43) des Windschutzscheibenrahmens (5) und des Heckbereichs (6) einsetzbar ist, und daß innerhalb des wulstförmigen Endbereichs (41) Mittel (44) vorgesehen sind, die den aufgeblasenen Endbereich (41) innerhalb der Aufnahme (43) fixieren.

14. Dach nach Anspruch 13, **dadurch gekennzeichnet**, daß ein Schlauch (45) in die wulstförmige Aufnahme (43) eingesetzt ist.

15. Dach nach Anspruch 13, **dadurch gekennzeichnet**, daß das Mittel (44) durch einen Kunststoffwinkel (46) gebildet wird, der zugleich als Einführhilfe für den wulstförmigen Endbereich (41) an die Aufnahme (43) dient.

## Claims

1. An inflatable roof for a vehicle, in particular for a passenger car, extending in the inflated state between a windscreen frame and a tail area, wherein the roof is subdivided into a plurality of air chambers, **characterized in that** the roof (4) has air chambers (11, 12, and 13 or 24, 25, 26, 27, 28) with a different pressure level (operating pressure) and a frame or support structure (14) comprising a plurality of air chambers (11, 12 and 13) and determining the shape of the roof, wherein a substantially higher pressure level is present in the air chambers of the frame or support structure (14) than in air chambers (24, 25, 26, 27 and 28) arranged therebetween.

2. A roof according to Claim 1, **characterized in that** the frame or support structure (14) of the roof (4) is formed by three mutually independent air chambers (11, 12 and 13).

3. A roof according to Claim 1 or 2, **characterized in that** a first air chamber (11) of the frame or support structure (14) extends along the periphery of the roof (4).

4. A roof according to Claim 1 or 2, **characterized in that** a second air chamber (12) of the frame or support structure (14) is formed by a longitudinally orientated portion (18) extending substantially in the middle of the vehicle and a transversely extending portion (20) arranged adjacent to an upper edge of a rear window (19), wherein the transversely extending portion (20) is divided in its two laterally outer areas into two respective arms (21 and 22 respectively) extending at angle to each other.

5. A roof according to Claim 3 or 4, **characterized in that** the end portions of the second air chamber (12) are extended to the first air chamber (11).

6. A roof according to Claim 1 or 2, **characterized in that** a third air chamber (13) of the frame or support structure (14) is formed by two cruciform portions (23), each cruciform portion (23) being extended on one side to the first air chamber (11) and on the other side to the second air chamber (12).

7. A roof according to one of the preceding Claims, **characterized in that** the roof (4) has two mutually independent air-chamber systems (30 and 31 respectively) at a considerably lower operating pressure, wherein each air-chamber system (30 and 31 respectively) comprises a plurality of air chambers (24, 25, 26, 27 and 28) connected to one another and extending in the interspaces between the three air chambers (11, 12 and 13) of the frame or support structure (14).

8. A roof according to Claim 7, **characterized in that** two adjacent air chambers (for example 24 and 25) of the air-chamber system (30 and 31 respectively) are operatively connected to each other by a connecting line (29), wherein the connecting line (29) passes through an air chamber (for example 13) of the frame or support structure (14).

9. A roof according to Claim 1, **characterized in that** the inflatable roof (4) additionally comprises shaping members (37) extending in the transverse direction of the vehicle.

10. A roof according to Claim 9, **characterized in that** the shaping members (37) are formed by slats (38) of plastics material.

11. A roof according to Claim 10, **characterized in that** the slats (38) are arranged in receiving pockets (40) in the roof (4).

12. A roof according to Claim 10, **characterized in that** the slats (38) have areas of different cross-section.

13. A roof according to one of the preceding Claims, **characterized in that** in the region of the windscreen frame (5) and the tail area (6) the first air chamber (11) on the periphery of the frame or support structure (14) has a bulging end area (41) insertible into an undercut receiving means (43) of the windscreen frame (5) and the tail area (6), and means (44) fixing the inflated end area (41) inside the receiving means (43) are provided inside the bulging end area (41).

14. A roof according to Claim 13, **characterized in that** a tube (45) is inserted into the bulging receiving means (43) [*sic*].

15. A roof according to Claim 13, **characterized in that** the means (44) is formed by an angle member (46) of plastics material, which acts at the same time as an insertion aid for the bulging end area (41) into the receiving means (43).

## Revendications

1. Toit gonflable pour un véhicule automobile, en particulier pour une voiture de tourisme, qui s'étend à l'état gonflé entre un cadre de pare-brise et une zone arrière de la carrosserie, le toit étant partagé en un grand nombre de chambres à air, caractérisé en ce que le toit (4) comporte des chambres à air (11, 12 et 13 ou 24, 25, 26, 27, 28) avec un niveau de pression (pression de service) différent et une structure de cadre ou d'appui constituée de plusieurs chambres à air (11, 12 et 13), définissant la forme du toit, un niveau de pression nettement plus important régnant dans les chambres à air de la structure du cadre ou d'appui (14) que dans les chambres à air (24, 25, 26, 27 et 28) intermédiaires.

2. Toit selon la revendication 1, caractérisé en ce que la structure du cadre ou d'appui (14) du toit (4) est constituée de trois chambres à air (11, 12 et 13) indépendantes les unes des autres.

3. Toit selon les revendications 1 ou 2, caractérisé en ce qu'une première chambre à air (11) de la structure du cadre d'appui (14) s'étend périphériquement le long du toit (4).

4. Toit selon les revendications 1 ou 2, caractérisé en ce qu'une deuxième chambre à air (12) de la structure du cadre ou structure d'appui (14) est constituée d'une partie (18) allongée, s'étendant à peu près au milieu du véhicule et d'une partie (20) transversale, située à proximité d'un bord supérieur d'une vitre arrière (19), la partie (20) transversale se séparant dans ses deux zones latérales extérieures, en deux bras (21 ou 22) qui forment un angle entre eux.

5. Toit selon les revendications 3 ou 4, caractérisé en ce que des parties terminales de la deuxième chambre à air (12) sont rapprochées de la première chambre à air (11).

6. Toit selon les revendications 1 ou 2, caractérisé en ce qu'une troisième chambre à air (13) de la structure du cadre ou structure d'appui (14) est constituée de deux parties (23) en croix, chaque partie (23) en croix étant rapprochée d'une part de la première chambre à air (11) et d'autre part de la deuxième chambre à air (12).

7. Toit selon l'une des revendications précédentes, caractérisé en ce que le toit (4) comporte deux systèmes de chambres à air (30 ou 31) indépendants l'un de l'autre avec une pression de service nettement inférieure, chaque système de chambres à air (30 ou 31) étant constitué de plusieurs chambres à air (24, 25, 26, 27 et 28) reliées entre elles, qui s'étendent dans les espaces intermédiaires compris entre les trois chambres à air (11, 12 et 13) de la structure du cadre ou structure d'appui (14).

8. Toit selon la revendication 7, caractérisé en ce que deux chambres à air par exemple (24 et 25) voisines du système de chambres à air (30 ou 31) sont en liaison active entre elles, grâce à un conduit de liaison (29), le conduit de liaison (29) traversant une chambre à air (par exemple 13) de la structure du cadre ou structure d'appui (14).

9. Toit selon la revendication 1, caractérisé en ce que le toit (4) gonflable comporte en supplément des éléments de formage (37) s'étendant dans la direction transversale du véhicule.

10. Toit selon la revendication 9, caractérisé en ce que les éléments de formage (37) sont formés par des lattes (38) en matière plastique.

11. Toit selon la revendication 10, caractérisé en ce que les lattes (38) sont placées dans des poches (40) formant logement du toit (4).

12. Toit selon la revendication 10, caractérisé en ce que les lattes (38) présentent des zones de section transversale différente.

13. Toit selon l'une des revendications précédentes, caractérisé en ce que la première chambre à air (11) périphérique de la structure du cadre ou structure d'appui (14) présente, dans la zone du cadre de parebrise (5) et de la zone arrière (7), une zone d'extrémité (41) en forme de bourrelet, qui peut être insérée dans un logement (43) détalonné du cadre de pare-brise (5) et de la zone arrière (6), et en ce qu'à l'intérieur de la zone d'extrémité (41) en forme de bourrelet, il est prévu des moyens (44), qui fixent la zone d'extrémité (41) gonflée à l'intérieur du logement (43).

14. Toit selon la revendication 13, caractérisé en ce qu'un tuyau (45) est inséré dans le logement (43) en forme de bourrelet.

15. Toit selon la revendication 13, caractérisé en ce que le moyen (44) est formé par une cornière en matière plastique (46) qui sert en même temps d'auxiliaire d'introduction de la zone d'extrémité (41) en forme de bourrelet, dans le logement (43).
